# EUROPÄISCHE PATENTSCHRIFT

(11) **EP 2 725 274 B1**
(45) Veröffentlichungstag und Bekanntmachung des Hinweises auf die Patenterteilung: **26.09.2018**
(21) Anmeldenummer: 13190136.5
(22) Anmeldetag: 24.10.2013
(51) Int. Cl.: F16L 27/08, F16L 27/12

(54) **Höhenverstellbare Rohrverbindung**
Height adjustable pipe joint
Raccord de tuyaux réglable en hauteur

(30) Priorität: 25.10.2012 DE 202012010207 U; 15.03.2013 DE 202013101128 U
(43) Veröffentlichungstag der Anmeldung: 30.04.2014
(73) Patentinhaber: Schütz, Lothar, 87737 Boos (DE)
(72) Erfinder: Schütz, Lothar, 87737 Boos (DE)
(74) Vertreter: Schulz, Manfred

(56) Entgegenhaltungen:
- JP-A- H09 280 441
- KR-A- 20080 096 154

## Beschreibung

Die Erfindung betrifft eine höhenverstellbare Rohrverbindung mit einem inneren Rohr und einem gegenüber dem inneren Rohr stufenlos verschiebbaren äußeren Rohr, nach Anspruch 1.

Im Stand der Technik sind in der Höhe stufenlos verschiebbare Rohrverbindungen bekannt, siehe z.B. JP H09280441. Dabei ist weiterhin bekannt, dass man derartige Rohrverbindungen auch stufenlos verstellen kann und zwar mittels entsprechender Distanzeinstellvorrichtungen. Derartige Distanzeinstellvorrichtungen haben allerdings den Nachteil, dass sie beim bestimmungsgemäßen Einsatz, also zum Beispiel im Neubau, wunderbar funktionieren, während bei einer späteren Anpassung des Geländes und/oder bei Reparaturarbeiten das Problem besteht, dass man die Distanzeinstellvorrichtung dann nicht mehr ausreichend oder gar nicht mehr betätigen kann. Insbesondere Verschmutzung und/oder Korrosion hindern dabei beispielsweise die Verstellmöglichkeiten. Aus dem Stand der Technik ist des Weiteren eine Distanzeinstellvorrichtung für eine höhenverstellbare Rohrverindung bekannt, die mittels Gewindestangen verstellbar und einstellbar ist. Dabei wird eine Gewindestange in ein rohrförmiges Element hineingedreht bzw. aus diesem herausgedreht, um eine Veränderung des Maßes der Rohrverbindung zu erreichen. Wie bereits erwähnt, kommt es dabei äußerst häufig vor, dass diese Verstelleinrichtung schwergängig und/oder überhaupt nicht mehr verwendbar ist, wenn die Rohrverbindung beispielsweise über mehrere Jahre im bestimmungsgemäßen Einsatz war.

Dies kann beispielsweise bei Reparaturarbeiten an einer Straßendecke vorkommen,in der sich eine solche höhenverstellbare Rohrverbindung befindet. Dabei wird beispielsweise der Deckbelag der Straße abgefräst. In den Bereichen, in welchen sich Kanäle und/oder entsprechende Armaturen, also beispielsweise auch eine solche höhenverstellbare Rohrverbindung befindet, besteht das Problem, dass man diese Rohrverbindung dann eben nicht ohne weiteres verstellen kann, beispielsweise so tief legen kann, dass eine Straßenfräse ohne Probleme darüber fahren könnte, ohne diese Rohrverbindung bzw. Armatur zu beschädigen. Demzufolge wird bei derartigen Arbeiten im Bereich um den Kanal bzw. die Armatur das Abtragen händisch vorgenommen werden müssen, um die Armaturen nicht zu beschädigen. Ausgehend von diesem Stand der Technik ist es Aufgabe der Erfindung, eine höhenverstellbare Rohrverbindung vorzuschlagen, die zumindest einen der zuvor genannten Nachteile des Standes der Technik nicht mehr aufweist.

Die Aufgabe der Erfindung wird gelöst durch eine höhenverstellbare Rohrverbindung mit einem inneren Rohr und einem gegenüber dem inneren Rohr stufenlos verschiebbaren äußeren Rohr, wobei beide Rohre ein Medium führen können, wobei eine Distanzeinstellvorrichtung zur stufenlosen Verstellung der Rohrverbindung vorgesehen ist, die Distanzeinstellvorrichtung fixier- und wieder lösbar ausgebildet ist und die an den äußeren Enden des inneren und äußeren Rohres angreift, die sich dadurch auszeichnet, dass die Distanzeinstellvorrichtung zumindest ein teleskopierbares, das heißt, ineinanderschiebbares Verstell- und Fixierungselement umfasst, welches wenigstens zwei form- und/ oder kraftschlüssig zusammenwirkende Teilelemente nach Anspruch 1 umfasst.

Durch eine solche fixierbare und wieder lösbare Distanzeinstellvorrichtung ist es jetzt problemlos möglich, den Form- und/oder Kraftschluss des Verstell- und Fixierungselementes jederzeit zu lösen, um eine Verstellung vorzunehmen. Dies kann beispielsweise sowohl eine Verstellung in der Höhe bzw. Länge sein, als auch ein Verkürzen der höhenverstellbaren Rohrverbindung. Das wenigstens eine teleskopierbare, das heißt, ineinanderschiebbare Verstell- und Fixierungselement ist dabei vorteilhafter Weise beispielsweise von zwei ineinanderschiebbaren Rohren gebildet, wobei ein oberes erstes Rohrstück an dem dem zweiten Rohrstück zugewandten Ende zumindest zweiseitig geschlitzt ist, um auseinandergespreizt werden zu können. Dabei wird ein Spreizelement in dieses erste Rohr als Teilelement hineingesetzt und beispielsweise durch einen Spannbolzen, der zumindest an den beiden äußeren Enden ein Gewinde aufweist, in das Rohr hineingezogen, wodurch dieses gespreizt wird. Durch das Spreizen des Rohres mit dem Spreizelement liegt dieses mit seiner Außenwandung an der Innenwandung des zweiten Rohres als Teilelement an, wodurch eine kraftschlüssige Verbindung entsteht, die äußerst belastbar ist. So haben Versuche ergeben, dass problemlos Lasten bis zu 40 t durch eine solche Verbindung getragen werden, was zum Beispiel einen Einsatz als Element im Straßenbau durchaus ermöglicht.

Man erhält dabei eine "Rohr-in-Rohr-Verbindung", die sicher spannt und hält, die allerdings problemlos wieder lösbar ist.

Vorteilhafter Weise wird die Distanzeinstellvorrichtung zwei- oder drei teleskopierbare, das heißt, ineinanderverschiebbare Verstell- und Fixierungselemente aufweisen. Die Nachteile des Standes der Technik bezüglich der Schwergängigkeit der Schraubverbindungen bzw. von Gewindespindeln oder die Unwirksamkeit von Getrieben, die korrodiert sind, treten bei der Erfindung überhaupt nicht mehr auf. Es ist lediglich notwendig, das Spreizelement zu lösen, beispielsweise durch einen leichten Stoß oder es durch Klopfen leicht herausrutschen zu lassen, wobei beim Lösen natürlich nicht das gesamte Spreizelement herausgleitet.

Durch das Lösen der Spreizung und insbesondere die Ausgestaltung des ersten Teilelementes als Rohr ist es jetzt gegeben, dass sich dieses Verstell- und Fixierungselement problemlos bewegen lässt, sowohl zum Auseinanderziehen, als auch zum Ineinanderschieben der Rohrverbindung. Hat man die gewünschte Höhenlage erreicht, wird wieder fixiert. Beim nächsten Verstellvorgang funktioniert die erfindungsgemäße Lösung in gleicher Weise. Demzufolge kann man solche höhenverstellbare Rohrverbindungen nach der Erfindung jetzt auch dort einsetzen, wo bisher im Straßenbau beispielsweise händisch gearbeitet werden musste. Durch die Höhenverstellmöglichkeit der Rohrverbindung, auch nach einem bestimmungsgemäßen Einsatz nach vielen Jahren ist es jetzt möglich, eine solche Verbindung beispielsweise für das Abfräsen von Straßenbelag abzusenken, um sie später wieder anzuheben. Dabei ist es natürlich von Vorteil, wenn die höhenverstellbare Rohrverbindung einen teleskopierbaren Mantel sozusagen als Gehäuse aufweist, der sich insbesamt mit der höhenverstellbaren Rohrverbindung teleskopieren lässt. Dies schlägt dann auch eine Weiterbildung der Erfindung vor.

Die erfindungsgemäße Lösung zeichnet sich dadurch aus, dass ein erstes Teilelement des Verstell- und Fixierelementes demnach von einem Rohr gebildet ist, welches in ein zweites, ebenfalls rohrförmiges Teilelement einschiebbar ist, wobei das erste Teilelement an der zum zweiten Teilelement weisenden Seite zumindest einseitig, vorzugsweise zweiseitig geschlitzt ist und ein konusförmiges Spreizelement vorgesehen ist, welches das erste Teilelement an dem geschlitzten Ende durch Hineinziehen des Spreizelementes spreizt, so dass es mit seiner Außenwand an der Innenwandung des zweiten Teilelementes anliegt und so einen Kraftschluss herstellt. Die erfindungsgemäßen Vorteile wurden vorstehend bereits ausführlich behandelt. Die Aufgabe der Erfindung wird demzufolge durch diese Weiterbildung der Erfindung in hervorragender Weise gelöst.

Die Erfindung zeichnet sich auch dadurch aus, dass das Spreizelement mit einer mit Innengewinde versehenen Bohrung, bevorzugt einer Durchgangsbohrung, versehen ist, in die ein Spannbolzen eingreift, wobei der Spannbolzen zumindest abschnittsweise, das heißt auf der dem Spreizelement zugewandten Seite mit einem zum Innengewinde korrespondierenden Außengewinde versehen ist. Dadurch gelingt es, dass man das Spreizelement mit Hilfe des Spannbolzens und einer entsprechenden Auflage, beispielsweise einer oberen Platte, das Spreizelement in das erste Teilelement, welches rohrförmig ausgebildet ist, hineinzuziehen und dessen geschlitztes Ende auseinanderzuspreizen. Demzufolge wird durch das Hineinziehen des Spreizelementes eine kraftschlüssige Verbindung geschaffen, die in der Lage ist, erhebliche Kräfte aufzunehmen. So ist beispielsweise die höhenverstellbare Rohrverbindung nach der Erfindung insgesamt mit erheblichen Kräften belastbar, sodass insgesamt Lasten bis zu 40 t durch die Vorrichtung aufgenommen beziehungsweise an das Erdreich übertragen werden können, ohne dass eine Beschädigung an den Armaturen vorkommt.

Von Vorteil ist es weiter, wenn zumindest das Verstell- und Fixierelement der Distanzeinstellvorrichtung aus einem nicht korrodierbarem beziehungsweise nicht rostendem Material, vorzugsweise aus Edelstahl gebildet ist. Bei einer Ausführung aus Edelstahl, die insgesamt zwar teurer ist als aus üblichem Stahl angefertigte Elemente, ist es allerdings gegeben, dass über lange Jahre hin eben keine Korrosion an der Distanzeinstellvorrichtung beziehungsweise den dazu gehörigen Verstell- und Fixierelementen passiert, damit auch nach vielen Jahren des bestimmungsgemäßen Einsatzes eine Verstellung der höhenverstellbaren Rohrverbindung noch möglich ist. Selbstverständlich lässt sich dies auch mit einem anderen, nicht rostendem Material erreichen, wie beispielsweise aus V2A- oder V4A-Stahl.

Von Vorteil ist es weiterhin, dass das Verstell- und Fixierelement, bestehend aus den Teilelementen, dem Spreizelement sowie dem Spannbolzen in Art eines Spreizdübels ausgebildet ist. Dabei ist überraschend, dass die Ausgestaltung, wie in Art eines Spreizdübels in der Lage ist, die vorher beschriebenen enorm hohen Lasten aufzunehmen. Eine solche Lösung wurde bisher noch nicht im Tiefbau, insbesondere bei der Ausgestaltung von höhenverstellbaren Rohrverbindung eingesetzt und ist damit einzigartig.

Von Vorteil ist es weiter, wenn - wie in einer Weiterbildung der Erfindung vorgeschlagen - die Distanzeinstellvorrichtung zwei Platten umfasst, die erste Platte mit dem äußeren Ende des inneren Rohres der höhenverstellbaren Rohrverbindung und die zweite Platte mit dem äußeren Ende des äußeren Rohres verbunden ist und wenn wenigstens ein Verstell- und Fixierelement an beiden Platten angreift. Dabei ist es bevorzugt, wenn die zweite in Einbaustellung nach unten weisende Platte von einem Gehäuseboden eines die höhenverstellbare Rohrverbindung umgebenden Gehäuses gebildet ist und/oder die zweite Platte mit dem Gehäuseboden verbunden ist. Sind mehrere Verstell- und Fixierelemente vorgesehen, greifen natürlich alle Verstell- und Fixierelemente an beiden Platten an.

Die Erfindung zeichnet sich auch dadurch aus, dass der Spannbolzen an der im Einbauzustand zur zweiten, oberen Platte weisenden Seite ebenfalls mit Gewinde versehen ist, auf welches eine Mutter aufschraubbar ist, um im Zusammenwirken mit der zweiten, oberen Platte den Spannbolzen zu spannen. Damit wird die Lösung insgesamt so komplettiert, dass ein vollständiges System zur Verfügung gestellt wird, um Rohrverbindungen nach der Erfindung entsprechend zu gestalten. Dabei ist die zuvor beschriebene Variante selbstverständlich als Weiterbildung der Erfindung, insbesondere des Hauptanspruchsbegehrens zu verstehen.

Ein weiterer Aspekt der erfindungsgemäßen Lösung ist dadurch angegeben, dass der Spannbolzen an der im Einbauzustand zur zweiten, oberen Platte weisenden Seite beidseitig Abflachungen aufweist oder als Vierkant beziehungsweise Sechskant ausgebildet ist, um den Spannbolzen im Spreizelement drehen zu können, das heißt zu einer eventuellen Längenverstellung des Spannbolzens zu dienen. Dies wird immer dann erforderlich sein, wenn eine Längen- beziehungsweise Höhenveränderung der höhenverstellbaren Rohrverbindung nach der Erfindung vorgenommen wird. Dann ist regelmäßig der Spannbolzen entweder zu verlängern beziehungsweise zu verkürzen. Dabei wird der Spannbolzen mit einer Verkürzung derselben durch das Spreizelement weiter hindurchgeschraubt, während er im umgekehrten Fall zurückgedreht wird, um eine Längenveränderung zu erreichen.

Wie bereits erwähnt, ist es von Vorteil, wenn zumindest die zweite (obere) Platte im Wesentlichen dreieckförmig ausgebildet ist, wobei jeweils an den Ecken der Platte ein Verstell- und Fixierelement vorgesehen ist. Das heißt im vorher beschriebenen Fall haben wir insgesamt drei Verstell- und Fixierelemente an den Ecken vorgesehen, wodurch natürlich die Verstellmöglichkeit verbessert und insgesamt die Stabilität der höhenverstellbaren Rohrverbindung weiter erhöht wird. Die Erfindung umfasst jedoch auch Varianten, bei denen sowohl die erste Platte als auch die zweite Platte vieleckig, z.B. viereckig, sechs- oder achteckig oder rund ausgebildet ist.

Ein weiterer Nachteil des Standes der Technik wird durch die Erfindung beseitigt, indem eine Verdrehsicherung vorgesehen ist, die ein Verdrehen bei der Höhenverstellung der Rohrverbindung verhindert. Im Stand der Technik ist es häufig vorgekommen, dass beim Verstellen der Rohrverbindung sich die beiden Rohre gegeneinander verdreht haben, so dass beispielsweise vorgesehene Schnittstellen zum Anschluss von Armaturen und/oder Medien führenden Leitungen so verdreht werden, dass man sie nicht ohne Weiteres zusammenfügen kann. Um dies zu verhindern ist erfindungsgemäß eine Verdrehsicherung vorgesehen. Dabei ist beispielsweise die Verdrehsicherung in Form einer Nut-in-Feder-Verbindung vorgesehen, wobei die Feder beispielsweise an dem äußeren Rohr vorgesehen ist, während die Nut sich in einer Führungsplatte beziehungsweise in einem dort vorgesehenen Flansch befindet, die/der das äußere Rohr umschließt und die/der insbesondere zumindest an einem der Verstell- und Fixierungselemente fixiert ist. Dadurch wird der Effekt erreicht, dass ein Verdrehen bei einem Verstellvorgang sicher verhindert wird. Des Weiteren wird natürlich eine entsprechend sichere Führung beim Teleskopiervorgang der höhenverstellbaren Rohrverbindung erreicht. Im Übrigen wird unter "höhenverstellbarer Rohrverbindung" selbstverständlich auch eine Rohrverbindung gesehen, die beispielsweise horizontal eingebaut ist. Demzufolge wäre dies dann eine Längenverstelleinrichtung. Auch eine solche Lösung ist ohne Weiteres möglich. Beim bestimmungsgemäßen Einsatz der höhenverstellbaren Rohrverbindung ist jedoch die senkrechte Einbaulage dominierend.

Des Weiteren ist die höhenverstellbare Rohrverbindung nach der Erfindung in einer Weiterbildung dadurch gekennzeichnet, dass eine Distanzbegrenzungseinrichtung vorgesehen ist, die das Auseinandergleiten des inneren und äußeren Rohres und/oder der Distanzeinstellvorrichtung verhindert und welche die Gesamtlänge bzw. Gesamthöhe der Rohrverbindung begrenzt.

Bei den Lösungen des Standes der Technik war es häufig gegeben, dass aufgrund einer nicht begrenzten Verstellmöglichkeit entweder äußeres und inneres Rohr auseinandergezogen wurden oder zumindest ein Teil eines gegebenenfalls an der Rohrverbindung vorgesehenen Gestänges beispielsweise zum Betätigen von Schiebern auseinandergezogen wird. Die höhenverstellbare Rohrverbindung nach der Erfindung umfasst demzufolge auch eine Lösung, bei der eine solche Getriebestange ebenfalls teleskopierbar an dieser Rohrverbindung vorgesehen ist.

Die Distanzbegrenzungseinrichtung nach der Erfindung wird beispielsweise durch einen Flansch angegeben, der mit einem am in Einbaurichtung unten vorgesehenen Abschlussring am äußeren Rohr zusammenwirkt und der die Auszugslänge des äußeren Rohres begrenzt.

Erfindungsgemäß wurde weiter gefunden, dass es von Vorteil ist, wenn zumindest die das innere Rohr gegen das äußere Rohr abdichtende Dichtung aus einem gegenüber Bakterien oder Viren beständigen beziehungsweise diese am Durchtreten in das Medium hinderndem Material gebildet ist. Tatsächlich ist es im Stand der Technik so, dass es sich herausgestellt hat, dass die üblicherweise verwendeten Dichtungen aus Gummimaterial oder aus einem flexiblem Kunststoff bei Kontamination, insbesondere bei länger bestehender Kontamination, Viren oder Bakterien in das Medium eintreten können. So hat es sich beispielsweise heraus gestellt, dass wenn bestimmte höhenverstellbare Rohrverbindungen im Stand der Technik mit einem Schacht ummantelt waren, in dem sozusagen Oberflächenwasser eindringen und stehen bleiben konnte, eine Kontamination einer gesamten Trinkwasseranlage zumindest in einem Teilbereich vorkam, wenn das Wasser nicht abgeführt wurde. Aus diesem Grund ist es natürlich von Vorteil, wenn eine solche bakterien- beziehungsweise virenbeständige Dichtung erfindungsgemäß mit eingesetzt wird, um dies zu verhindern.

Um nun das Verbleiben von Oberflächenwasser in einem Schacht zu verhindern, ist es nach der Erfindung weiter vorgesehen, dass ein die gesamte Rohrverbindung umgebender, vorzugsweise höhenverstellbarer Schacht bzw. ein Gehäuse oder ein Rohrmantel in Einbaustellung nach unten weisend einen Auslauf aufweist, über den gegebenenfalls eintretendes Wasser in eine dort vorgesehene Sickerpackung, zum Beispiel aus Kies, versickern kann. Durch das zur Verfügungstellen eines Auslaufes auf der Unterseite des Schachtes ist es nun gegeben, dass falls Wasser eindringen sollte, dieses ohne weiteres in die Sickerpackung aus Kies versickern kann und so eine Kontamination der Dichtung beziehungsweise über die Dichtung in das Mediensystem bereits durch diese Weiterbildung des Erfindungsgegenstandes nicht mehr vorkommen kann. Dies erhöht natürlich die Sicherheit einer solchen Rohrverbindung gegenüber Viren- und Bakterienbeständigkeit weiter. Nach der Erfindung wird dies geschickterweise gemäß einer bevorzugten Variante so gelöst, dass die erste, unten angeordnete Platte der höhenverstellbaren Rohrverbindung gleichzeitig den Schachtboden bildet und der Auslauf in der Platte vorgesehen ist.

Die höhenverstellbare Rohrverbindung nach der Erfindung zeichnet sich gemäß einer Weiterbildung, die selbstverständich im Zusammenhang mit allen vorher beschriebenen Varianten und Ausführungsformen kombinierbar ist, dadurch aus, dass der Schacht bzw. das Gehäuse zumindest zweiteilig ausgebildet ist, wobei ein oberes Gehäuseelement in ein unteres Gehäuseelement einschiebbar ist. Diese Ausgestaltung hat den Vorteil, dass entgegen der im Stand der Technik üblichen Ausgestaltung, wonach das obere Gehäuseelement über das untere Gehäuseelement überstülpbar bzw. daraufschiebbar angeordnet ist, den Vorteil, dass sich bei einem Verstellvorgang kein Erdreich zwischen die beiden Gehäuseelemente setzen kann. Dies wird zum einen durch die Dichtung verhindert, die beispielsweise auf dem oberen Rand des unteren Gehäuseelementes aufgesetzt ist, zum anderen muss man nicht befürchten, dass das obere Gehäuseelement den Widerstand des den Schacht umgebenden Erdreiches überwinden muss.

Gemäß einer vorteilhaften Weiterbildung ist es außerdem vorgesehen, dass an der in Einbaustellung nach oben weisenden Seite eine Verbindungsschnittstelle, vorzugsweise eine als Klemmdichtung ausgebildete Dichtung angeordnet ist, mittels derer das obere Gehäuselement gegenüber dem unteren Gehäuseelement abgedichtet und gleichzeitig festgelegt werden kann. Dabei sind das obere und das untere Gehäuseelement vom Durchmesser her so ausgebildet, dass beim Einschieben des oberen Gehäuseelementes in das untere nur ein geringes Spiel vorhanden ist, wodurch gewissermaßen bereits eine Selbsthemmung eintritt, wenn keine Kraft auf das obere Gehäuseelement wirkt, bzw. dort keine Last angreift. Von Vorteil ist es zudem, wenn das Gehäuse einen in Einbaustellung oberen Gehäuserand aufweist, der mittels eines Gehäusedeckels verschließbar ist. Bevorzugt kann ein solcher Gehäuserand natürlich als Flansch ausgebildet sein, in den der Gehäusedeckel einklapp- oder einlegbar ist.

Die Erfindung zeichnet sich des Weiteren dadurch aus, dass an dem äußeren Rohr der höhenverstellbaren Rohrverbindung ein Hydrant anordenbar bzw. angeordnet ist. Damit lässt sich natürlich in einfacher Weise ein nicht höhenverstellbarer Hydrant zu einem höhenverstellbaren umrüsten, indem er auf die höhenverstellbare Rohrverbindung aufgesetzt wird. Dabei hat es sich als besonders vorteilhaft erwiesen, wenn an dem Hydranten ein Tragbügel vorgesehen ist, mittels dessen der Hydrant auf die höhenverstellbare Rohrverbindung leicht aufgesetzt werden kann bzw. im Bedarfsfall dort auch wieder abgenommen werden kann. Insbesondere ist der Tragbügel auch dazu geeignet, die Höhenein- bzw. -verstellung der höhenverstellbaren Rohrverbindung zu erleichtern. Beim bestimmungsgemäßen Einsatz kann der Monteur bei einem Verstellvorgang an diesem Bügel sehr leicht entweder mit einem Hebezeug oder aber auch händisch angreifen, um den Verstellvorgang durchzuführen.

Die höhenverstellbare Rohrverbindung nach der Erfindung zeichnet sich auch dadurch aus, dass an dem inneren Rohr, das heißt, an dem in Einbaustellung unteren Rohr ein Schieber angeordnet ist, der mittels einer Getriebestange, vorzugsweise über ein am Schieber vorgesehenes Getriebe betätigbar ist, wobei die Getriebestange insbesondere höhenverstellbar, bzw. teleskopierbar ausgebildet ist. Weiter vorn wurde auf diese Ausgestaltung bereits eingegangen.

In der Zeichnung ist die Erfindung insbesondere in einem Ausführungsbeispiel schematisch dargestellt. Es zeigen:

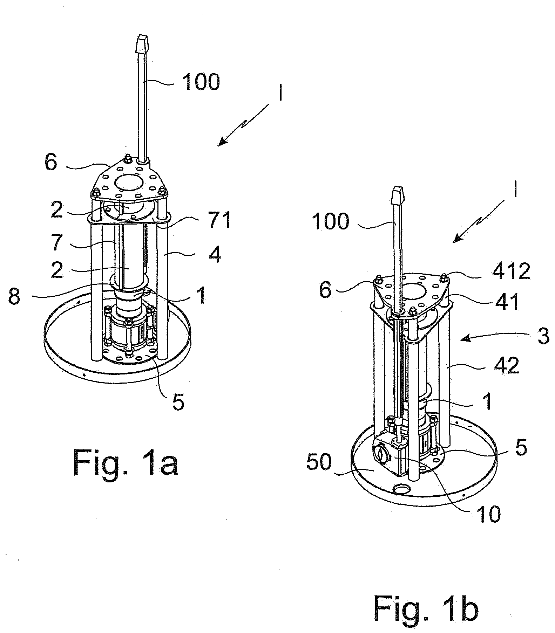

- Fig. 1a, 1b: eine dreidimensionale Ansicht einer Rohrverbindung nach der Erfindung;
- Fig. 2: eine Ausführungsform der Rohrverbindung nach der Erfindung in Vorder-, Seiten- und Draufsicht;
- Fig. 3a bis 3d: verschiedene Details der Rohrverbindung nach der Erfindung;
- Fig. 4a bis 4e: eine höhenverstellbare Rohrverbindung nach der Erfindung mit einem Gehäuse;
- Fig. 5a bis 5c: weitere Varianten der höhenverstellbaren Rohrverbindung nach der Erfindung mit einem Hydranten.

In den Figuren sind gleiche oder einander entsprechende Elemente jeweils mit den gleichen Bezugszeichen bezeichnet und werden daher, sofern nicht zweckmäßig, nicht erneut beschrieben.

In den Figuren ist eine erste Ausführungsform der Rohrverbindung I nach der Erfindung gezeigt. Dabei ist ein inneres Rohr 1 vorgesehen, über das ein äußeres Rohr 2 geschoben werden kann. Das innere Rohr 1 ist beispielsweise mittels eines Schiebers 10 an einer ersten Platte 5 bzw. einem Gehäuseboden 50 befestigt, während das äußere Rohr 2 an einer zweiten Platte 6 befestigt ist. Die Distanzeinstellvorrichtung 3 besteht aus einem Verstell- und Fixierelement 4. Dieses Verstell- und Fixierelement 4 ist wiederum gebildet von einem ersten Teilelement 41 und einem zweiten Teilelement 42. Das erste Teilelement 41 ist dabei in das zweite Teilelement 42 eingeführt. Es ist demzufolge vom Durchmesser her so vorgesehen, dass es leicht beweglich in dem zweiten Teilelement 42 bewegbar ist. Bei einem Aufspreizen des ersten Teilelements wird allerdings dieses erste Teilelement 41 im zweiten Teilelement 42 festgelegt.

An dem äußeren Rohr 2 ist eine Verdrehsicherung 7 angedeutet. Hierbei ist eine Feder vorgesehen, die in einer Sicherungsplatte 71 mit einer entsprechenden Nut geführt ist. Die Sicherungsplatte 71 ist dabei wie ersichtlich, an den zweiten Teilelementen 42 befestigt bzw. festgelegt. Demzufolge kann ein Verdrehen des inneren Rohres 1 gegenüber dem äußeren Rohr 2 bei einer Verstellbewegung nicht mehr erfolgen. Des Weiteren ist eine Distanzbegrenzungseinrichtung 8 gezeigt, die hier beispielsweise auf einem an dem äußeren Rohr 2 befestigten Flansch besteht. Dieser Flansch schlägt in der am weitesten ausgezogenen Stellung an der Sicherungsplatte 71 an. Da diese Sicherungsplatte 71 an den zweiten Teilelementen 42 befestigt ist, kann ein Auseinandergleiten von innerem und äußerem Rohr 1, 2 sicher verhindert werden.

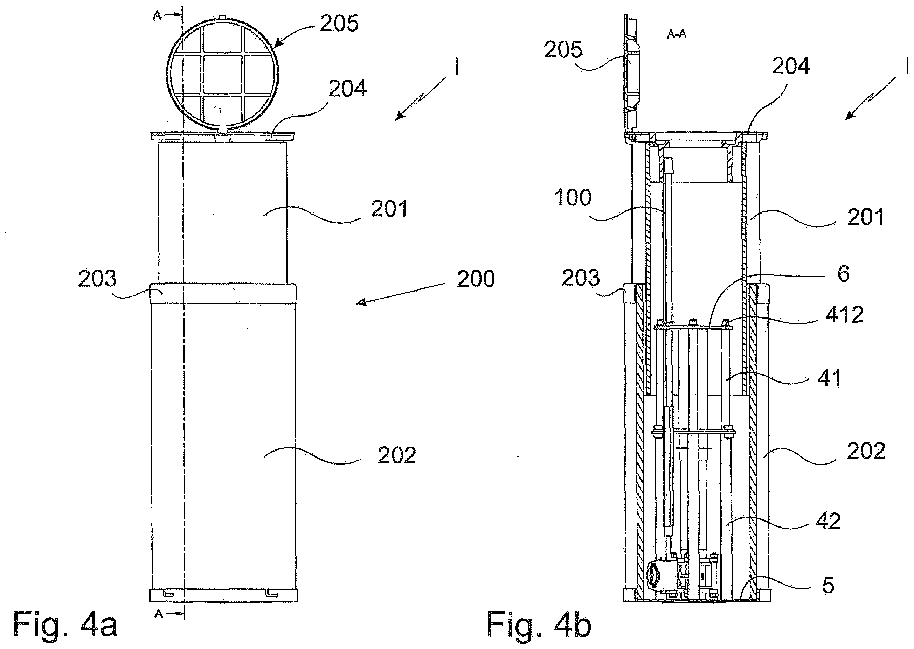

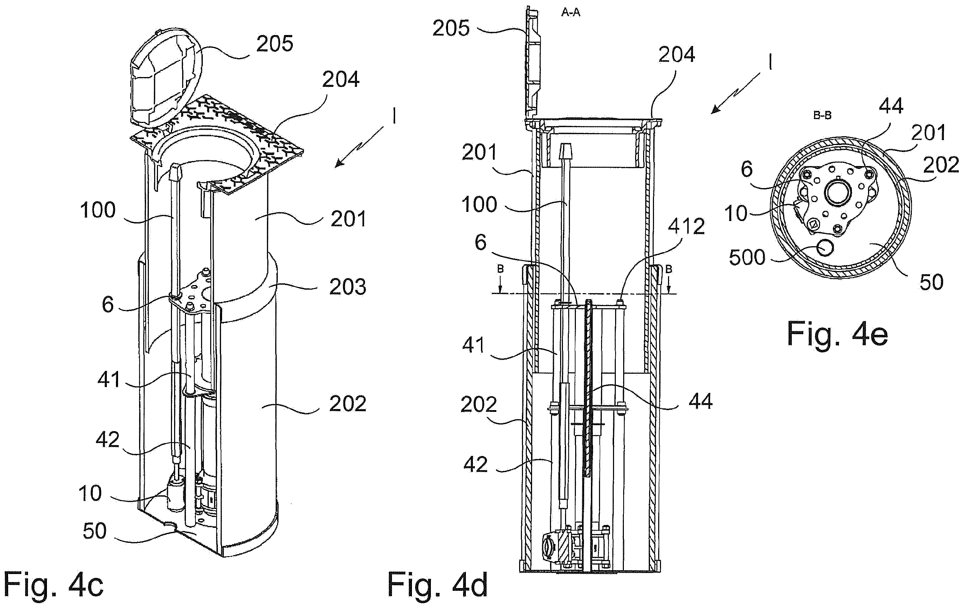

An der ersten Platte 5 ist ein Gehäuseboden 50 vorgesehen, der beispielsweise eine Ummantelung mit einem Gehäuse 200 (siehe Fig. 4) der gesamten höhenverstellbaren Rohrverbindung I ermöglicht. Eine Getriebestange 100 ist für die Verstellung des Getriebes 10 vorgesehen. Über dieses Getriebe 10 wird beispielsweise ein nicht näher dargestellter Absperrschieber betätigt.

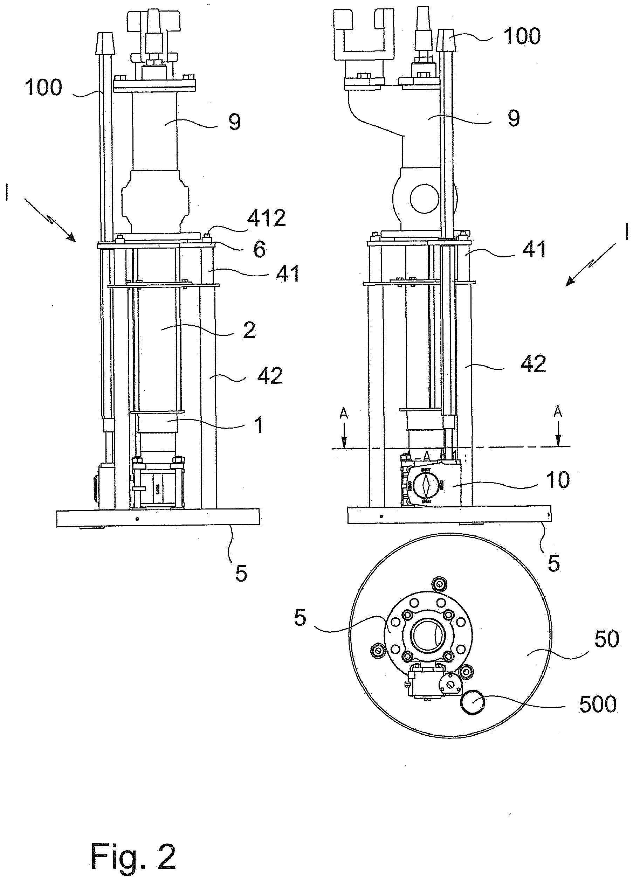

In Fig. 2 sind gleiche Merkmale mit den gleichen Bezugszeichen versehen, weshalb auf eine erneute Vorstellung verzichtet werden kann. Wie ersichtlich, ist in Fig. 2 eine Ausführungsform der Rohrverbindung nach der Erfindung in Vorder-, Seiten- und Draufsicht gezeigt. Aus der Darstellung wird klar, dass hier beispielsweise ein Hydrant 9 als Armatur oberhalb der Rohrverbindung I vorgesehen ist. Dies hat den Vorteil, dass beispielsweise bei der Entwässerung des Hydranten 9 austretendes Wasser so austreten kann, dass es beispielsweise in einen Schacht gelangt, der die gesamte Rohrverbindung inklusive des Hydranten umgibt und an dem ein Auslauf 500 vorgesehen ist. Über diesen Auslauf 500 kann dann das austretende Wasser in eine Sickerpackung gelangen, wo es sicher versickern kann. Ein Kontaminieren der Medien führenden Leitungen wird dadurch sicher verhindert. Insbesondere kann über bestimmte Dichtungen keine Kontaminierung mehr erfolgen. Bekannter Maßen ist es so, dass beispielsweise Kunststoff-, Silikon- oder Gummidichtungen das Eintreten von Bakterien und/oder Viren nicht verhindern. Dadurch, dass jetzt beispielsweise bei der Ausführungsform, wie sie in Fig. 2 dargestellt wird, austreten des Wasser sicher abgeführt werden kann und nicht mit den Dichtelementen in Verbindung kommt, kann eine solche Kontamination verhindert werden.

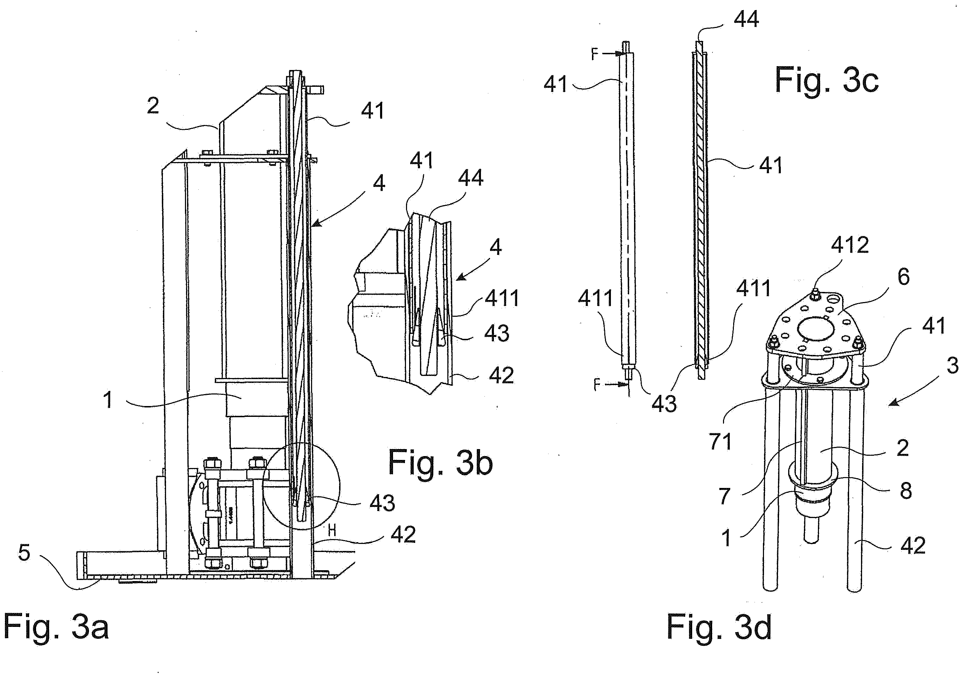

In den Fig. 3a bis 3d sind verschiedene Details der Rohrverbindung nach der Erfindung gezeigt. Auch hier ist es so, dass die gleichen Bezugszeichen für bereits vorgestellte Merkmale verwendet werden. Zu beachten ist, dass hier beispielsweise in Fig. 3a ein Kreis gezeigt ist, welcher darauf hinweist, dass in Fig. 3b dieses Detail in einer Vergrößerung dargestellt wurde. Hier ist ersichtlich, wie das Verstell- und Fixierelement 4 funktioniert. Dabei ist beispielsweise in dem ersten Teilelement von unten ein Spreizelement 43 eingeführt, welches über einen Spannbolzen 44 anziehbar, jedoch auch wieder lösbar ist. Demzufolge befindet sich am unteren Ende des Spannbolzens 44 ein Gewinde, welches in ein am Spreizelement 43 vorhandenes Gewinde eingreift. Mit dem Bezugszeichen 411 ist in Fig. 3c das geschlitzte Ende des ersten Teilelements 41 angedeutet. Dabei ist eine zumindest zweiseitige Schlitzung von Vorteil. Außerdem ist von Vorteil, wenn an der Außenwandung des ersten Teilelements 41 eine Aufrauhung vorhanden ist, die den Kraftschluss durch Hinzufügen eines Reibschlusses noch günstiger gestaltet, so dass noch höhere Kräfte übertragen werden können. Durch das Anziehen des Spreizelements 43 mittels des Spannbolzens 44 wird das geschlitzte Ende 411 des ersten Teilelements 41 auseinandergetrieben und zwar so, dass es fest an der Innenwand des zweiten Teilelements 42 anliegt. Die Spannbolzen 44 werden an der Platte 6 befestigt. Dabei sind die Spannbolzen 44 so gestaltet, dass sie neben dem Spannen des Spreizelements 43 gleichzeitig auch der Befestigung und Fixierung des äußeren Rohres 2 dienen. Die Spannung erfolgt dabei über Muttern 412, die gleichzeitig dem Befestigen des Verstell- und Fixierelementes 4 an der Platte 6 dienen.

In den Fig. 4a bis 4e ist eine weitere Ausführungsform der höhenverstellbaren Rohrverbindung nach der Erfindung mit einem Gehäuse 200 gezeigt. Dabei ist zunächst in der Fig. 4a eine Außenansicht zu sehen, aus der hervorgeht, dass das Gehäuse 200 aus einem oberen Gehäuseelement 201 und einem unteren Gehäuseelement 202 gebildet ist. Dabei ist, wie ersichtlich, das obere Gehäuseelement 201 in das untere Gehäuseelement 202 einschiebbar. In Einbaustellung nach oben wird das Gehäuse 200 von einem oberen Gehäuserand 204 abgeschlossen, wobei der obere Gehäuserand 204 mittels eines Gehäusedeckels 205 verschließbar ist. Die Fig. 4b zeigt eine Seitenansicht in Schnittdarstellung in der gleichen Ausführungsform. Alle bisher in den vorhergehenden Figuren bereits vorgestellten Bezugszeichen werden hierbei in gleicher Weise verwendet, so dass auf eine erneute Vorstellung verzichtet werden kann.

Fig. 4c. zeigt eine dreidimensionale Darstellung, wobei ein Teil des Gehäuses 200 aufgeschnitten ist, um sichtbar zu machen, wie die höhenverstellbare Rohrverbindung I in dem Gehäuse 200 angeordnet ist.

Fig. 4d zeigt in einer Seitenansicht eine andere Darstellung als Fig. 4b. Dabei ist beispielsweise das Klemm- und Fixierelement 4 mit dem ersten Teilelement 41 und dem zweiten Teilelement 42 besser ersichtlich. Insbesondere ist eine dieser Verbindungen geschnitten gezeigt, wodurch der Spannbolzen 44 sichtbar wird.

Fig. 4e ist eine Draufsicht und zwar an der Schnittlinie B/B in Fig. 4d.

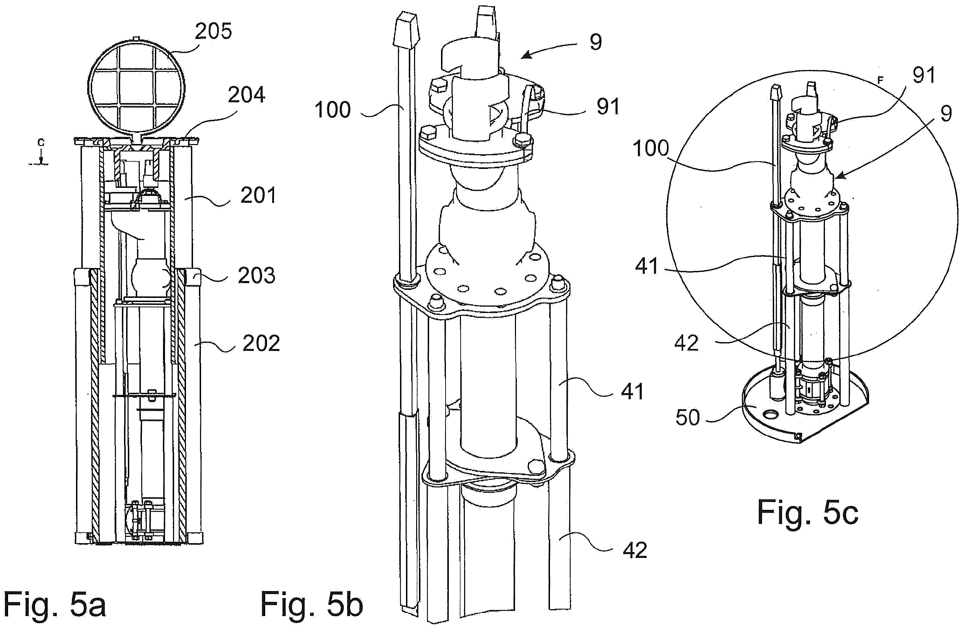

Die Figuren 5a bis 5c zeigen eine Ausgestaltung der erindungsgemäßen höhenverstellbaren Rohrverbindung I, wobei in Fig. 5a ersichtlich ist, dass in dem Gehäuse 200 an der höhenverstellbaren Rohrverbindung I und zwar nach oben weisend, ein Hydrant 9 angeordnet bzw. befestigt ist.

In Fig. 5b sieht man die gleiche Darstellung ohne das Gehäuse. Dabei wird ersichtlich, dass hier zur Erleichterung des Aufsetzens des Hydranten 9 auf die höhenverstellbare Rohrverbindung bzw. auch für das Herausnehmen ein Tragbügel 91 angeordnet ist. Dieser Tragbügel 91 ist dabei natürlich auch für das Auseinanderziehen bzw. Ineinanderschieben der höhenverstellbaren Rohrverbindung I vorgesehen.

Fig. 5c zeigt, welcher Ausschnitt für Fig. 5b gewählt wurde.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Höhenverstellbare Rohrverbindung mit einem inneren Rohr (1) und einem gegenüber dem inneren Rohr stufenlos verschiebbaren äußeren Rohr (2), wobei beide Rohre (1, 2) ein Medium führen können, wobei eine Distanzeinstellvorrichtung (3) zur stufenlosen Verstellung der Rohrverbindung (I) vorgesehen ist, die Distanzeinstellvorrichtung (3) fixier- und wieder lösbar ausgebildet ist und die an den äußeren Enden des inneren und des äußeren Rohres (1, 2) angreift, wobei die Distanzeinstellvorrichtung (3) zumindest ein teleskopierbares, das heißt ineinanderschiebbares Verstell- und Fixierelement (4) umfasst, welches wenigstens zwei form- und kraftschlüssig zusammenwirkende Teilelemente (41, 42) umfasst, **dadurch gekennzeichnet, dass** ein erstes Teilelement (41) des Verstell- und Fixierelementes (4) von einem Rohr gebildet ist, welches in ein zweites, ebenfalls rohrförmiges Teilelement (42) einschiebbar ist, wobei das erste Teilelement (41) an der zum zweiten Teilelement (42) weisenden Seite geschlitzt ist und ein konusförmiges Spreizelement (43) vorgesehen ist, welches das erste Teilelement (41) an dem geschlitzten Ende (411) durch Hineinziehen des Spreizelementes (43) spreizt, sodass es mit seiner Außenwand an der Innenwandung des zweiten Teilelementes (42) anliegt und so einen Kraftschluss herstellt.

2. Höhenverstellbare Rohrverbindung nach einem der vorhergehenden Ansprüche, **dadurch gekennzeichnet, dass** das Spreizelement (43) mit einer mit Innengewinde vorgesehenen Bohrung, bevorzugt einer Durchgangsbohrung, versehen ist, in die ein Spannbolzen (44) eingreift, wobei der Spannbolzen (44) zumindest abschnittsweise, das heißt auf der dem Spreizelement (43) zugewandten Seite mit einem zum Innengewinde korrespondierenden Außengewinde versehen ist und/oder zumindest das Verstell- und Fixierelement (4) der Distanzeinstellvorrichtung (3) aus einem nicht korrodierbarem beziehungsweise nicht rostendem Material, vorzugsweise aus Edelstahl, gebildet ist.

3. Höhenverstellbare Rohrverbindung nach einem der vorhergehenden Ansprüche, **dadurch gekennzeichnet, dass** das Verstell- und Fixierelement (4), bestehend aus den Teilelementen (41, 42), dem Spreizelement (43) sowie dem Spannbolzen (44) in Art eines Spreizdübels ausgebildet ist, wobei bevorzugt die Distanzeinstellvorrichtung (3) zwei Platten (5, 6) umfasst, die erste Platte (5) mit dem äußeren Ende des inneren Rohres (1) und die zweite Platte (6) mit dem äußeren Ende des äußeren Rohres (2) verbunden ist und das wenigstens eine Verstell- und Fixierelement (4) an beiden Platten (5, 6) angreift, wobei insbesondere bevorzugt die erste Platte (5) von einem Gehäuseboden 50 eines die höhenverstellbare Rohrverbindung umgebenden Gehäuses (200) gebildet ist und/oder die erste Platte (5) mit dem Gehäuseboden (50) verbunden ist.

4. Höhenverstellbare Rohrverbindung nach Anspruch 3, **dadurch gekennzeichnet, dass** der Spannbolzen (44) an der im Einbauzustand zur zweiten, oberen Platte (6) weisenden Seite ebenfalls mit Gewinde versehen ist, auf welches eine Mutter (412) aufschraubbar ist, um den Spannbolzen (44) zu spannen, wobei insbesondere der Spannbolzen (44) an der im Einbauzustand zur zweiten, oberen Platte (6) weisenden Seite beidseitig Abflachungen aufweist oder als Vierkant oder Sechskant ausgebildet ist, um den Spannbolzen im Spreizelement (43) zu drehen, das heißt zu einer eventuellen Längenverstellung des Spannbolzens (44) zu dienen.

5. Höhenverstellbare Rohrverbindung nach Anspruch 3, **dadurch gekennzeichnet, dass** zumindest die zweite Platte (6) im wesentlichen dreieckförmig ausgebildet ist, wobei jeweils an den Ecken der Platte (6) ein Verstell- und Fixierelement (4) vorgesehen ist und/oder die zweite Platte (6) viereckig, vieleckig oder rund ausgebildet ist und/oder eine Verdrehsicherung (7) vorgesehen ist, die ein Verdrehen bei der Höhenverstellung der Rohrverbindung (I) verhindert, wobei bevorzugt die Verdrehsicherung (7) als Feder ausgebildet ist, die am äußeren Rohr (2) angeordnet ist und die mit einer Nut in einem am oberen Ende des zweiten, rohrförmigen Teilelementes (42) befestigten Flansches (71) zusammenwirkt.

6. Höhenverstellbare Rohrverbindung nach einem der vorhergehenden Ansprüche, **dadurch gekennzeichnet, dass** eine Distanzbegrenzungseinrichtung (8) vorgesehen ist, die das Auseinandergleiten des inneren und äußeren Rohres (1, 2) und/oder der Distanzeinstellvorrichtung (3) verhindert und welche die Gesamtlänge beziehungsweise Gesamthöhe der Rohrverbindung (I) begrenzt, wobei insbesondere die Distanzbegrenzungseinrichtung (8) durch den Flansch (71) angegeben ist, der mit einem am in Einbaurichtung unten vorgesehenen Abschlussring am äußeren Rohr (2) zusammenwirkt und der die Auszugslänge des äußeren Rohres (2) begrenzt.

7. Höhenverstellbare Rohrverbindung nach einem der vorhergehenden Ansprüche, **dadurch gekennzeichnet, dass** zumindest die das innere Rohr (1) gegen das äußere Rohr (2) abdichtende Dichtung aus einem gegenüber Bakterien oder Viren beständigen beziehungsweise diese am Durchtreten in das Medium hinderndem Material gebildet ist.

8. Höhenverstellbare Rohrverbindung nach einem der vorhergehenden Ansprüche, **dadurch gekennzeichnet, dass** ein die gesamte Rohrverbindung umgebender, vorzugsweise höhenverstellbarer Schacht bzw. ein Gehäuse (200) oder ein Rohrmantel vorgesehen ist, der an der in Einbaustellung nach unten weisenden Seite einen Auslauf (500) aufweist, über den gegebenenfalls eintretendes Wasser in eine dort vorgesehene Sickerpackung, zum Beispiel aus Kies, versickern kann.

9. Höhenverstellbare Rohrverbindung nach einem der vorhergehenden Ansprüche 4 bis 9, **dadurch gekennzeichnet, dass** die erste, unten angeordnete Platte (5) gleichzeitig den Schachtboden bildet und der Auslauf (500) in der Platte (5) vorgesehen ist.

10. Höhenverstellbare Rohrverbindung nach Anspruch 8 oder 9, **dadurch gekennzeichnet, dass** der Schacht bzw. das Gehäuse (200) zumindest zweiteilig ausgebildet ist, wobei ein oberes Gehäuseelement (201) in ein unteres Gehäuseelement (202) einschiebbar ist.

11. Höhenverstellbare Rohrverbindung nach einem der vorhergehenden Ansprüche, **dadurch gekennzeichnet, dass** an der in Einbaustellung nach oben weisenden Seite eine Verbindungsschnittstelle (203), vorzugsweise eine als Klemmdichtung ausgebildete Dichtung, angeordnet ist, mittels derer das obere Gehäuseelement (201) in dem unteren Gehäuseelement (202) abgedichtet und/oder festgelegt werden kann, wobei bevorzugt das Gehäuse (200) einen in Einbaustellung oberen Gehäuserand (204) aufweist, der mittels eines Gehäusedeckels (205) verschließbar ist.

12. Höhenverstellbare Rohrverbindung nach einem der vorhergehenden Ansprüche, **dadurch gekennzeichnet, dass** an dem äußeren Rohr (2) ein Hydrant (9) anordenbar bzw. angeordnet ist.

13. Höhenverstellbare Rohrverbindung nach einem der vorhergehenden Ansprüche, **dadurch gekennzeichnet, dass** an dem Hydranten (9) ein Tragbügel (91) vorgesehen ist, mittels dessen der Hydrant (9) auf die höhenverstellbare Rohrverbindung (I) aufsetzbar bzw. von dieser abnehmbar ist, insbesondere der Tragbügel (91) zur Höheneinstellung bzw. -verstellung der höhenverstellbaren Rohrverbindung (i) vorgesehen ist.

14. Höhenverstellbare Rohrverbindung nach einem der vorhergehenden Ansprüche, **dadurch gekennzeichnet, dass** an dem inneren Rohr (1) ein Schieber angeordnet ist, der mittels einer Getriebestange (100) vorzugsweise über ein am Schieber vorgesehenes Getriebe (10) betätigbar ist, wobei die Getriebestange (100) vorzugsweise höhenverstellbar bzw. teleskopierbar ausgebildet ist.

## Claims

1. Height-adjustable pipe joint comprising an inner tube (1) and an outer tube (2) that is continuously movable relative to the inner tube, the two tubes (1, 2) being able to guide a medium, a distance-setting device (3) being provided for continuously adjusting the pipe joint (I), the distance-setting device (3) being fixable and releasable and acting upon the outer ends of the inner and outer tubes (1, 2), the distance-setting device (3) comprising at least one adjusting and fixing element (4) that is telescopic, i.e. consists of portions capable of sliding into one another, and comprises at least two interlockingly and frictionally interacting sub-elements (41, 42), **characterized in that** a first sub-element (41) of the adjusting and fixing element (4) is formed of a tube that can slide into a second sub-element (42) that is also tubular, the first sub-element (41) being slotted on the end thereof that faces the second sub-element (42), and a conical expansion element (43) being provided that expands the first sub-element (41) at the slotted end (411) as a result of the expansion element (43) being inserted, such that the outer wall of said first sub-element abuts the inner wall of the second sub-element (42), thus establishing a frictional connection.

2. Height-adjustable pipe joint according to the preceding claim, **characterized in that** the expansion element (43) is provided with a hole, preferably a through-hole, that has an internal thread, in which hole a clamping bolt (44) engages, the clamping bolt (44) being provided at least in portions, i.e. on the end that faces the expansion element (43), with an external thread that corresponds to the internal thread, and/or at least the adjusting and fixing element (4) of the distance-setting device (3) being made of a non-corrodible or rust-resistant material, preferably stainless steel.

3. Height-adjustable pipe joint according to either of the preceding claims, **characterized in that** the adjusting and fixing element (4), which consists of the sub-elements (41, 42), the expansion element (43) and the clamping bolt (44), is designed as an expansion anchor, the distance-setting device (3) preferably comprising two plates (5, 6), the first plate (5) being connected to the outer end of the inner tube (1) and the second plate (6) being connected to the outer end of the outer tube (2), the at least one adjusting and fixing element (4) acting upon the two plates (5, 6), the first plate (5) particularly preferably being formed of a housing base 50 of a housing (200) that surrounds the height-adjustable pipe joint, and/or the first plate (5) being connected to the housing base (50).

4. Height-adjustable pipe joint according to claim 3, **characterized in that** the clamping bolt (44), on the end thereof that faces the second, upper plate (6) when mounted, is also provided with a thread onto which a nut (412) can be screwed in order to clamp the clamping bolt (44), the clamping bolt (44) in particular comprising flat surfaces on either side, or being designed as a square or a hexagon, on the end thereof that faces the second, upper plate (6) when mounted, in order to rotate the clamping bolt in the expansion element (43), i.e. for a possible longitudinal adjustment of the clamping bolt (44).

5. Height-adjustable pipe joint according to claim 3, **characterized in that** at least the second plate (6) is substantially triangular, an adjusting and fixing element (4) being arranged at each of the corners of the plate (6), and/or the second plate (6) being square, polygonal or round, and/or an anti-rotation means (7) being provided that prevents rotation while the height of the pipe joint (I) is being adjusted, the anti-rotation means (7) preferably being designed as a spring that is arranged on the outer tube (2) and interacts with a groove in a flange (71) that is fastened on the upper end of the second, tubular sub-element (42).

6. Height-adjustable pipe joint according to any of the preceding claims, **characterized in that** a distance-limiting device (8) is provided that prevents the inner and outer tubes (1, 2) and/or the distance-setting device (3) from sliding out of one another and limits the overall length or overall height of the pipe joint (I), the distance-limiting device (8) in particular being provided by the flange (71), which interacts with an obturating ring provided at the bottom of the outer tube (2) in the mounting direction and limits the extension length of the outer tube (2) .

7. Height-adjustable pipe joint according to any of the preceding claims, **characterized in that** at least the seal which seals the inner tube (1) from the outer tube (2) is made of a bacteria-resistant or virus-resistant material, or of a material that prevents bacteria or viruses from entering the medium.

8. Height-adjustable pipe joint according to any of the preceding claims, **characterized in that** a preferably height-adjustable shaft, which surrounds the entire pipe joint, or a housing (200) or a tubular casing is provided, which comprises, on the end that faces downwards when mounted, an outlet (500) by means of which water that may enter can drain into a drainage pit provided therein, which is made of e.g. gravel.

9. Height-adjustable pipe joint according to any of the preceding claims 4 to 9, **characterized in that** the first, lower plate (5) simultaneously forms the shaft base, and the outlet (500) is provided in the plate (5).

10. Height-adjustable pipe joint according to either claim 8 or claim 9, **characterized in that** the shaft or the housing (200) is formed of at least two parts, it being possible for an upper housing element (201) to slide into a lower housing element (202) .

11. Height-adjustable pipe joint according to any of the preceding claims, **characterized in that** a connection interface (203), preferably a seal designed as a clamp seal, is arranged on the end that faces upwards when mounted, by means of which interface the upper housing element (201) can be sealed and/or secured in the lower housing element (202), the housing (200) preferably comprising a housing rim (204), which is at the top when mounted and can be closed by means of a housing cover (205) .

12. Height-adjustable pipe joint according to any of the preceding claims, **characterized in that** a hydrant (9) can be arranged or is arranged on the outer tube (2).

13. Height-adjustable pipe joint according to any of the preceding claims, **characterized in that** a carrying handle (91) is provided on the hydrant (9), by means of which the hydrant (9) can be placed on the height-adjustable pipe joint (I) or removed therefrom, the carrying handle (91) in particular being provided for setting or adjusting the height of the height-adjustable pipe joint (I).

14. Height-adjustable pipe joint according to any of the preceding claims, **characterized in that** a slide is arranged on the inner tube (1), which slide can be actuated by means of a transmission rod (100), preferably by means of a transmission (10) provided on the slide, the transmission rod (100) preferably being height-adjustable or telescopic.

## Revendications

1. Jonction de tubes réglable en hauteur comprenant un tube intérieur (1) et un tube extérieur (2) pouvant coulisser de façon continue par rapport au tube intérieur, les deux tubes (1, 2) pouvant guider un milieu, un dispositif de réglage de distance (3) étant prévu pour régler de façon continue la jonction de tubes (I), le dispositif de réglage de distance (3) étant conçu pour être fixé de manière amovible et s'engageant avec les extrémités extérieures des tubes intérieur et extérieur (1, 2), le dispositif de réglage de distance (3) comportant au moins un élément de réglage et de fixation (4) télescopique, c'est-à-dire coulissant par emboîtement, qui comporte au moins deux sous-éléments (41, 42) qui coopèrent par complémentarité de formes et en force, **caractérisé en ce qu'**un premier sous-élément (41) de l'élément de réglage et de fixation (4) est formé par un tube qui peut être introduit dans un deuxième sous-élément (42) également tubulaire, le premier sous-élément (41) étant fendu du côté dirigé vers le deuxième sous-élément (42) et un élément d'écartement (43) en forme de cône étant prévu qui écarte le premier sous-élément (41) au niveau de l'extrémité fendue (411) par insertion de l'élément d'écartement (43) de manière à venir en appui, avec sa paroi extérieure, sur la paroi intérieure du deuxième sous-élément (42) et donc à réaliser une liaison en force.

2. Jonction de tubes réglable en hauteur selon l'une des revendications précédentes, **caractérisée en ce que** l'élément d'écartement (43) est pourvu d'un trou pourvu d'un filetage intérieur, de préférence un trou traversant, dans lequel s'engage un boulon de serrage (44), le boulon de serrage (44) étant pourvu au moins par endroits, c'est-à-dire du côté dirigé vers l'élément d'écartement (43), d'un filetage extérieur correspondant au filetage intérieur et/ou au moins l'élément de réglage et de fixation (4) du dispositif de réglage de distance (3) étant formé à partir d'une matière inoxydable ou résistante à la corrosion, de préférence d'un acier spécial.

3. Jonction de tubes réglable en hauteur selon l'une des revendications précédentes, **caractérisée en ce que** l'élément de réglage et de fixation (4), comprenant les sous-éléments (41, 42), l'élément d'écartement (43) et le boulon de serrage (44), est conçu à la manière d'une cheville expansible, le dispositif de réglage de distance (3) comprenant de préférence deux plaques (5, 6), la première plaque (5) étant reliée à l'extrémité extérieure du tube intérieur (1) et la deuxième plaque (6) étant reliée à l'extrémité extérieure du tube extérieur (2) et l'au moins un élément de réglage et de fixation (4) s'engageant sur deux plaques (5, 6), la première plaque (5) étant formée de manière particulièrement préférée par un fond de boîtier 50 d'un boîtier (200) entourant la jonction de tubes réglable en hauteur et/ou la première plaque (5) étant reliée au fond de boîtier (50).

4. Jonction de tubes réglable en hauteur selon la revendication 3, **caractérisée en ce que** le boulon de serrage (44) est également pourvu, du côté dirigé à l'état monté vers la deuxième plaque supérieure (6), d'un filetage sur lequel peut être vissé un écrou (412) pour serrer le boulon de serrage (44), le boulon de serrage (44) comportant en particulier, du côté dirigé à l'état monté vers la deuxième plaque supérieure (6), des méplats de chaque côté ou étant conçus sous la forme d'un carré ou d'un hexagone, pour faire tourner le boulon de serrage dans l'élément d'écartement (43), c'est-à-dire pour servir à régler éventuellement la longueur du boulon de serrage (44).

5. Jonction de tubes réglable en hauteur selon la revendication 3, **caractérisée en ce qu'**au moins la deuxième plaque (6) a sensiblement une forme triangulaire, un élément de réglage et de fixation (4) étant prévu au niveau de chacun des coins de la plaque (6) et/ou la deuxième plaque (6) ayant une forme carrée, polygonale ou ronde et/ou un dispositif anti-rotation (7) étant prévu qui empêche la rotation pendant le réglage en hauteur de la jonction de tubes (I), le dispositif anti-rotation (7) étant de préférence réalisé sous la forme d'un ressort qui est disposé au niveau du tube extérieur (2) et qui coopère avec une gorge ménagée dans une bride (71) fixée à l'extrémité supérieure du deuxième sous-élément tubulaire (42).

6. Jonction de tubes réglable en hauteur selon l'une des revendications précédentes, **caractérisée en ce qu'**un moyen de limitation de distance (8) est prévu qui empêche l'écartement par coulissement des tubes intérieur et extérieur (1, 2) et/ou du dispositif de réglage de distance (3) et qui limite la longueur totale ou la hauteur totale de la jonction de tubes (I), le moyen de limitation de distance (8) étant en particulier constitué par la bride (71) qui coopère au niveau du tube extérieur (2) avec une bague d'extrémité inférieure par référence au sens de montage et qui limite la longueur d'extension du tube extérieur (2).

7. Jonction de tubes réglable en hauteur selon l'une des revendications précédentes, **caractérisée en ce qu'**au moins la garniture d'étanchéité réalisant l'étanchéité du tube intérieur (1) par rapport au tube extérieur (2) est formée à partir d'une matière résistante aux bactéries ou aux virus ou empêchant ceux-ci de pénétrer dans le milieu.

8. Jonction de tubes réglable en hauteur selon l'une des revendications précédentes, **caractérisée en ce qu'**il est prévu un puits, de préférence réglable en hauteur, entourant toute la jonction de tubes ou un boîtier (200) ou une enveloppe tubulaire qui comporte, du côté dirigé vers le bas dans la position de montage, une sortie (500) permettant à l'eau, qui pénètre éventuellement, de s'infiltrer dans un bourrage de pierres prévu à cet endroit, par exemple du gravier.

9. Jonction de tubes réglable en hauteur selon l'une des revendications précédentes 4 à 9, **caractérisée en ce que** la première plaque inférieure (5) forme en même temps le fond du puits et la sortie (500) est prévue dans la plaque (5).

10. Jonction de tubes réglable en hauteur selon la revendication 8 ou 9, **caractérisée en ce que** le puits ou le boîtier (200) est formé d'au moins deux parties, un élément de boîtier supérieur (201) pouvant être introduit dans un élément de boîtier inférieur (202).

11. Jonction de tubes réglable en hauteur selon l'une des revendications précédentes, **caractérisée en ce qu'**il est prévu, du côté tourné vers le haut dans la position de montage, une interface de liaison (203), de préférence une garniture d'étanchéité conçue sous la forme d'une garniture d'étanchéité par serrage, au moyen de laquelle l'élément de boîtier supérieur (201) peut être scellé et/ou fixé dans l'élément de boîtier inférieur (202), le boîtier (200) comportant de préférence un bord de boîtier supérieur (204), dans la position de montage, qui peut être fermé au moyen d'un couvercle de boîtier (205).

12. Jonction de tubes réglable en hauteur selon l'une des revendications précédentes, **caractérisée en ce qu'**une prise d'eau (9) est disposée ou peut être disposée au niveau du tube extérieur (2).

13. Jonction de tubes réglable en hauteur selon l'une des revendications précédentes, **caractérisée en ce qu'**il est prévu au niveau de la prise d'eau (9) un étrier de support (91) permettant de placer la prise d'eau (9) sur la jonction de tubes réglable en hauteur (I) ou de le retirer de celle-ci, en particulier l'étrier de support (91) est prévu pour régler ou déplacer en hauteur la jonction de tubes réglable en hauteur (I).

14. Jonction de tubes réglable en hauteur selon l'une des revendications précédentes, **caractérisée en ce qu'**un coulisseau est disposé au niveau du tube intérieur (1), lequel coulisseau peut être actionné au moyen d'une barre de transmission (100), de préférence par le biais d'une transmission (10) prévue au niveau du coulisseau, la barre de transmission (100) étant de préférence conçue pour être réglable en hauteur ou télescopique.
